Europäisches Patentamt

European Patent Office

Office européen des brevets

(19)

(11) Publication number: **0 032 403**
**B1**

(12) **EUROPEAN PATENT SPECIFICATION**

(45) Date of publication of patent specification: 08.05.85

(21) Application number: 81100209.6

(22) Date of filing: 14.01.81

(51) Int. Cl.⁴: **B 22 F 3/10, C 04 B 35/64, C 22 C 1/04**

(54) Manufacture of parts from particulate material.

(30) Priority: 14.01.80 US 111632
29.09.80 US 191996

(43) Date of publication of application:
22.07.81 Bulletin 81/29

(45) Publication of the grant of the patent:
08.05.85 Bulletin 85/19

(84) Designated Contracting States:
AT BE CH DE FR GB IT LI LU NL SE

(56) References cited:
GB-A-1 516 079
US-A-3 313 622
US-A-4 011 291

(73) Proprietor: WITEC Cayman Patents Ltd.
Barclay's Bank Building P.O. Box 1043
George Town Grand Cayman Cayman Islands
British West Indies (KY)

(72) Inventor: Wiech, Raymond E., Jr.
4659 Pescadero Avenue
San Diego California 92107 (US)

(74) Representative: Strasse, Joachim, Dipl.-Ing.
Strasse und Stoffregen European Patent
Attorneys Zweibrückenstrasse 17
D-8000 München 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is directed towards a method for producing an article from a fired particulate configuration including the steps of: Mixing together predetermined amounts of sinterable particulate material and a binder whereby the binder covers substantially all of the surface of the particles of the particulate material; forming said mixture into a desired configuration; placing the configuration in intimate contact with an absorbing body capable of absorbing said binder which is wetted by said binder; allowing said binder to flow from said configuration into said absorbing body to extract at least a predetermined portion of said binder from the configuration.

Such a method is known from U.S. patent 4 011 291 (CURRY). Other examples of prior art methods for manufacturing of parts from particulate material are disclosed in U.S. patent 2 939 199 (STRIVENS), 4 197 118 (WIECH) and British patents 779,242 and 1 516 079.

A basic problem of these methods is to minimize the disruption of the green body during the binder removal. In the method as disclosed in U.S. patent 4 011 291 the particulate configuration is placed into intimate contact with an absorbing body, the contact-area not being necessarily small compared to the size of the configuration. Any microscopic surface imperfections that are mechanically introduced, such as by physical contact with an external body, would be transfered to the green body and then subsequently, upon sintering, be transfered to the final body. The mechanism of transfer would be of two types: the first by the low intrinsic strength of the green body flowing into a scratch due to an imperfection in the wick and the second type would be the viscosity induced flowing of fine particles from the green body into the imperfection area and the subsequent filling of the area by the particulate material of the green body which has been loosened by the flow of material from the body.

In view of the above disadvantages it is in object of this invention to provide a method for producing an article from a fired particulate configuration by which the difficulties encountered with the physical contact of a large wick are overcome.

According to the invention this problem is overcome by a method in which only a chosen surface of the configuration is put into intimate contact with the absorbing body over which surface imperfections are acceptable so that a minimum of forces is directed into the configuration by the absorbing body.

The fluid binder will flow from the green body into the relatively dry porous body, the amount and flow rate being determined by the relative free surface energy of liquid binder and porous body, the effective average pore size of the porous body, the viscosity of the fluid binder, the transfer efficiency of the fluid across the green body—porous body interface and other similar factors. If the temperature is then slowly raised, the volume thermal expansion of the fluid binder will generally aid in the removal of the binder and this is readily accomplished at the initial temperature advances during sintering. At some time, depending upon the specifics of the system, the body will be opened by virtue of sufficient binder removal and sintering or further binder removal by other means can proceed. The remaining portion of the binder can later be burned off during sintering or reclaimed from the porous body prior to sintering by a process such as washing or leaching.

More detailed description of the invention is given below with reference to the drawings in which:—

Figure 1 is a showing of a classical sesile drop,

Figure 2 is a showing of the rise of a liquid in a capillary,

Figures 3A and 3B are diagrams showing the acceleration head effect.

At the outset, it should be understood that, while the specific embodiments of the invention may refer to specific materials, the invention applies to all materials which can be finely divided to particulates which can be held together with a binder and then fused after binder removal by the application of heat thereto or an equivalent process step. In the manufacture of precision parts in accordance with the prior art and primarily those parts made of metal, cermets, and ceramics, articles could not usually be formed directly from particulate materials in accordance with classical injection molding techniques with commercial yields or with any degree of reliability, especially when the cross section presented molding difficulties due to thickness, large flat areas, etc. The reason for the manufacturing difficulty in parts produced from particulate materials is due to the large shrinkage in sintering and in the breakage during the binder removal stage of processing. In accordance with the present invention, particulate materials can be molded directly from particulate material to net shape without other costly manufacturing steps.

The processing steps in producing an article in accordance with the method of the present invention are (1) material selection, (2) mixing of materials, (3) forming of a green body, (4) binder removal and (5) sintering.

The starting material consists mainly of two (2) components, the particulate material and the binder. Each of these components can be, and usually is, a complex combination of materials designed and optimized to have the desired physical and chemical characteristics. The selection of the material is sensitive to the part end use and frequently requires skill to achieve the desired end result. For example, if the end product is to be porous, e.g. a filter element, a rather large particle size (in excess of 100 microns) would be selected. If a dense nonporous material is desired, then the initial particulate material would be very fine (less than 5 microns). Mixtures of particulate material sizes would be employed for other special properties.

In order to form the particulate material into a useful shape, it is desirable that the material have the property of plasticity or be plastico-viscous. This is accomplished by mixing suitable particulate material with a suitable binder. The binder has a flow point substantially below the sintering temperature of the particulate material which ultimately forms the final part. The minimum volume of binder required to render a particulate material plastic is that which just fills the interstices between the particle plus an infinitesimal volume i.e. V+dV where V is the intersticial volume and dV is a differential increment. In general, as the volume fraction of the binder is increased from its minimum value of plasticity the particulate material/binder mixture often becomes more fluid at a given temperature.

The property of plasticity or plastico-viscosity is developed in the green molding material in two ways. First, if the particulate material is fine enough, i.e. has sufficient surface area per unit weight of particulate material, the particulate-binder mixture tends to become plastic. This is well known in the ceramic art in that fine materials are added to increase plasticity. Second, if the thermoplastic binder is formulated by a mixture of two or more thermoplastic materials with widely different melting or flow points, then, as the lower temperature flow component is removed, the high temperature flow component remains behind and provides strength to the remaining green body.

Any conventional binder can be used including, in some cases, water.

The ratio of particulate material volume to binder volume is important to the molding and processing properties of the mixture. In general, it is important that the ratio be maintained from batch-to-batch for the production of any given part.

The complete and thorough mixing of the binder and particulate material is important to producing consistant batch-to-batch properties of material. Mixing is normally accomplished at lower temperatures. The mixing step would accomplish the thorough coating of each particle and the breaking up of particulate agglomerates. Mixers and mills of sufficient energy to accomplish this are required. For example, a paddle or sigma blade mixer is generally sufficient to mix binder and particulate material of 10 micron size. For very fine material, about 0.5 microns, high energy mixing or pre ball milling with a portion of the binder may be necessary to achieve the desired dispersion. In general, as the particulate materials become finer, it requires greater effort to incorporate them into the binder due to the greater surface energy per unit volume of particulate material.

The mixed particulate material/binder system is then formed into the desired shape to provide a "green body" where dimensions are such that it will, when sintered, be of the designed final net dimensions. Any molding or machining technique, e.g. extrusion, casting, injection molding, drilling, tuning, etc. can be employed. The forming techniques used herein are those used in the prior art and do not form a part of the invention in and of themselves.

The binder removal operation involves removing a substantial portion of the binder from the green body. It is necessary to remove sufficient binder to open the interstitial passages of the green body so that, during the sintering processes, any gases or vapor liberated internally of the green body due to heating or chemical reactions may freely escape. If these gases and vapors could not freely escape, they would rapidly build up internal pressure in the green body and rupture it, causing cracking and deformation. If a portion of the green body is placed in intimate contact with a porous material, such as a porous ceramic plate, blotter or the like that has the property of being wet by the liquid binder and is initially free from binder and has sufficient volume and capillarity, then the binder will experience net fluid forces that will cause it to flow from all portions of the green body into the porous body at the points of contact with the green body if the temperature of the system is maintained above the melting point of the binder. The porous material provides no support to the green body and is designed to contact a minimum portion of the green body surface to avoid application of external forces to the green body.

The theory describing the phenomenon of capillarity is well known and will not be extensively covered here. However, a brief description of the effect is in order. A set of forces exists between liquid and solid interfaces.

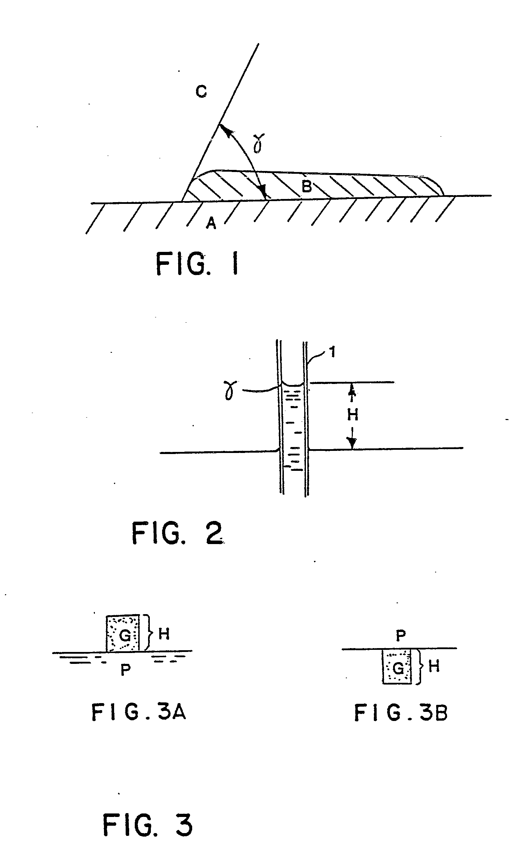

Figure 1 shows a classical sesile (or standing) liquid drop (B) on solid surface (A) surrounded by gas (or vapor or vacuum) (C). The drop makes a contact angle $\gamma$ with the solid surface depending upon the physical-chemical nature of A, B and C. As $\gamma$ approaches $C°$, perfect wetting occurs and the drop will spread infinitely over A. The surface energy of the liquid in contact with gas results in the phenomenon of surface tension. Figure 2 shows these effects on a small capillary tube 1.

The forces and geometry give rise to an unbalance of force which appear as a pressure or head which is described by:

$$H = \frac{K\sigma\cos(\gamma)}{D}$$

where
  H is the capillary head.
  $\sigma$ is the surface tension of the liquid against the gas.
  $\gamma$ is the contact angle of the liquid with the surface.
  D is the diameter of the capillary.
  K is a constant.

It is obvious that if the capillary were long enough and placed in a zero gravity environment (e.g. horizontal), the pressure force (H) would drain the liquid reservoir. Notice that for any system with a positive K (which is virtually all systems encountered in a gas-liquid interface), the pumping motion occurs as long as γ lies between 0° and 90°. Thus the actual capillary shape and quantity of interconnected capillaries does not alter the pumping ability, only the pumping rate.

The contact angle γ between the liquid binder and porous material is minimized by maximizing the free surface energy of the material by cleaning it by an appropriate method. For example, it is well known that a clean glass surface will permit water to spread or "sheet" on the surface, i.e. have a low or almost zero contact angle. A dirty glass surface or a treated glass surface, such as one that has been waxed, causes the water to "bead" due to the resulting high contact angles. Thus, the porous material is a porous glass and the binder is water, which is an acceptable binder in some particulate systems. The water binder can be sufficiently removed to open the body by placing the green body in intimate contact with a clean porous glass surface.

Of course, other criteria must also be met, since the requirement of the intimate contact between the green body and porous removal body is necessary, but not sufficient criteria. As was stated above, the capillary forces give rise to a pressure need which is the driving force behind the binder removal. It follows that, if the geometry of the green body and local gravity and/or acceleration effects are such as to produce pressure head requirements that cannot be met by the capillary force, the binder will simply not be removed. Figure 3 illustrates this effect. Figure 3A shows a green body with an effective position head due to gravity of H. In this case, H is in the same direction as the capillary forces and H will aid in the removal of the liquid binder from the green body G to the porous body P. In Figure 3B the porous body P is in contact with the green body G, but is above G. Assuming an acceleration field, e.g. gravity, in the downward direction, the head H subtracts from the capillary head forces and, depending upon the size, geometry and other physical conditions, the capillary head may not be able to overcome the external head. Thus, the placement of the porous body is important and must be taken into account.

During the binder removal, it is necessary to maintain the binder in a fluid state. As a matter of manufacturing prudence and to minimize binder removal time, it is desirable to slowly raise the green body temperature throughout the binder removal phase. The viscosity of normal liquids decreases and the volume increases as the temperature increases, with occasional exceptions over small temperature range. Thus, if the temperature is increased slowly during the binder removal phase, the liquid flows through the capillary system easier due to reduced viscosity, thereby increasing the flow rate. The driving internal pressure is extended due to the increase in binder volume, i.e. a greater weight percentage of binder can be removed by continually adding volume to the binder by thermal expansion as binder volume is removed from the system due to the capillary removal of binder.

After a period, sufficient binder will have been removed so that the interstices of the green body will have been sufficiently opened to achieve a green body of sufficient permeability to proceed with the sintering phase. At this time the body will have sufficient permeability to permit internally generated gases and vapors to escape without creating sufficient internal pressure to rupture or otherwise disrupt or distort the body.

If the porous body employed for binder rmoval is porous ceramic or some other material that can be fired during the sintering process without deforming and which is otherwise inert in the system at sintering temperatures, the part can be sintered as an extension of the binder removal phase so that the part may be left insitu and the sintering temperature/atmosphere schedule may proceed as one continuous process. The sintering operation is standard and in accordance with prior art sintering techniques. In the case of oxide ceramics, air firing is normally employed. In the case of metallic materials, neutral, reducing or vacuum atmospheres are commonly employed. Dew Point is a commonly measured and controlled parameter in sintering as well as other oxidation potential measurements.

If it is desirable to recover the removed binder, the permeable green part can be removed from the porous body and the binder recovered by washing, distillation, solvent extraction, etc. by processing the porous body containing the removed binder through an appropriate recovery process, which abound in the art. After proper sintering in a furnace or kiln in accordance with standard techniques, the final part is produced and removed from the kiln.

The articles manufactured in accordance with the above discussed steps have been found to undergo a substantially isotropic shrinkage that is repeatable and substantially predictable. Precision articles of metals and non-metal have been formed and have been found to be reproducible with high yields.

It has been found desirable to have a material as the binder that has a relatively well defined melting point and low liquid viscosity with excellent wetting properties.

Example I

Three hundred fifteen grams of substantially spherical nickel particulate material having an average particle size of four to seven microns and a specific surface area of 0.34 $m^2$/g (Inco type 123 nickel powder) was mixed with 35.2 g of carnauba wax. The mixture was placed in a laboratory type mixer of 0,95 litres capacity and mixed at a temperature of 1000°C for a period of one half hour. A homogeneous, uniform and modest viscosity plastisole was formed. It was removed from the mixer, allowed to cool for an hour until the carnauba wax had solidified. The hardened material was broken up by a hammer and the pieces were placed into an injection molding machine of one-half ounce capacity. Several dozen rings were formed in the injection molding machine. Three at random were removed from this batch and placed in a Blue M laboratory oven on laboratory filter paper and the temperature was slowly raised from ambient temperature to the melting point of the binder of carnauba wax over a period of twenty minutes. The oven was permitted to sit at this temperature overnight for about 12 hours after which a ring of carnauba wax on the filter paper was noticed. The temperature over the next 8 hours was raised to 100°C and the oven was maintained at this temperature overnight. The following day the molded wax ring on the filter paper had increased greatly. The temperature in the oven was then raised to 150°C for 48 hours whereupon the temperature was again raised to 2000°C for 8 hours. The oven was then allowed to cool and, when the temperature was close to room temperature, the three rings were removed therefrom. The rings were then placed into a controlled atmosphere kiln, the atmosphere of which was maintained at 90% argon and 10% hydrogen at a dew point of less than minus 60°C. The temperature was raised in the course of the next 24 hours from ambient to 700°F (371°C) in a substantially linear manner.

The temperature was then raised to 1300°F (704°C) and maintained and then raised to a temperature of 2150°F (1177°C) over a course of 6 hours in a linear manner. This temperature was maintained for one hour and the kiln was shut off and allowed to cool to substantially room temperature. The three rings were removed from the kiln and weighed and placed in a pycnometer and the density of each of the rings was determined to be 8.54 g/C³. A metallographic section of one specimen was then made, embedded in bakelite, polished and etched as to ASTM specification and then placed under a microscope. Spherical inclusions were noted substantially homogeneously distributed throughout the sample. The inclusions were much smaller than the crystal size and had a tendency to be located along crystal boundaries. The general appearance was that of forged material with spherical inclusions. The second ring that was removed from the kiln was measured and found to have an outside diameter of 2,26 to 2,25 cm since a perfect circle was not obtained. The second ring was then placed in a circular die of diameter 2,248 cm and forced through the die by an arbor press. The ring was measured and found to have a substantially uniform diameter of 2,25 cm. That portion of the ring that was forced through the die was bright and shiney in appearance. As measured by a pycnometer, the density was found to be 8.65 after having made a weight check. The weight of the part was found to remain substantially constant. A metallographic section was made of the second ring in the manner described above. It was found that the uniform spherical inclusion structure had been altered by the compression of the outer circumference of the ring so that the outermost inclusions having compressed into an oblate shape with major axis about the same as the diameter of the sphere and the minor axis lying along the plane of the radius of the ring. The spherical inclusions along the inner diameter of the ring were found to be relatively unchanged.

Example II

A run was made exactly the same as in Example I with exactly the same equipment with the particulate material being changed from nickel to substantially spherical iron of average particle diameter of 4 to 6 microns of substantially spherical shape. In this example 278.19 g of iron were mixed with carnauba wax. The same testing procedure as set forth in Example I was utilized and the results were substantially identical to those listed in Example I except that the density of the rings removed from the kiln was approximately 7.46. The same results as in Example I were obtained after compression of the rings in a die in an arbor press.

Example III

A further run was made using exactly the same procedure as set forth in Example I except that a mixture of nickel and iron was substituted for the nickel alone. 50% of the weight of nickel as set forth in Example I and 50% of the weight of iron as set forth in Example II were utilized and mixed with the 35.2 g of carnauba wax. The results were exactly as set forth above with reference to Example I. The density of the rings after removal from the kiln was not measured specifically but the volume was found to have decreased after removal from the die. The weight of the body after sintering and after removal from the die was substantially the same. The article was observed during the metallographic observation under the microscope was noted to be a true alloy rather than isolated regions of nickel and iron.

Example IV

185.3 g of $Fe_2O_3$ of particle size less than 1 micron (of the type used for making magnetic tape as is well known) was mixed with 35.2 g of carnauba wax and then operated on as set forth in Example I. The ring was molded as in Example I and binder finally removed in the manner as set forth in Example I, except that the firing schedule in the atmospheric kiln was not the same and hydrogen was continually flowed through the sintering region of the kiln to maintain a reducing atmosphere therein. The temperature was immediately raised to 700°F (371°C) and thereafter there was no difference in the firing schedule as set forth in Example I. The iron oxide is found to be reduced to metallic iron by the hydrogen component of the sintering atmosphere. There was also found to be a substantial decrease in volume of the ring during sintering. When the sintered pieces that were left were measured with a pycnometer, before and after hitting with a hammer, it was determined qualitatively that crushing took place. It was also found quantitatively in the pycnometer that density increased. The important feature in this example is that $Fe_2O_3$ is a brittle material and so the starting material is brittle and does not have ductility at any time whereas the sintered material evolved did have ductility.

Example V

A green body is formed by injection molding a mixture of 278.19 g of iron powder having a particle size of 3 to 5 microns diameter and substantially spherical in shape in 35.2 g of a paraffin binder having a melting point of 56°C—0.5°C. This mixture was formed by prior art techniques as set forth in British Patent No. 1,516,079. The shape of the injection molded green body was a plate approximately 1.9 cm by 1.9 cm by 0.5 cm thick. The green plate was placed on a 5 cm by 5 cm square piece low ash filter paper which was in turn placed upon a porous ceramic (cordierite—magnesium silicon aluminate) plate.

The assembly was placed in an oven at a temperature of 80°C. In one hour the filter paper was saturated by melted paraffin as was the ceramic region directly under the green plate. The oven temperature was then increased to 125°C for one hour, at which time the green plate was removed and placed in a controlled atmospheric sintering oven and sintered according to a linear increase in temperature over a 24 hour period from room temperature to a sintering temperature of 2100°F (1149°C) and held there for one hour. The sintered part was approximately 95% of theoretical maximum density and free from cracks and bubbles.

Example VI

Example V was repeated except that the binder was a 50%—50% mixture of the paraffin and carnauba wax. The same schedule was followed with the same results.

**Claims**

1. A method for producing an article from a fired particulate configuration including the steps of:

(1) mixing together predetermined amounts of sinterable particulate material and a binder whereby the binder covers substantially all of the surface of the particles of the particulate material;
(2) forming said mixture from (1) into a desired configuration;
(3) placing the configuration from (2) in intimate contact with an absorbing body capable of absorbing said binder which is wetted by said binder;
(4) allowing said binder to flow from said configuration into said absorbing body to extract at least a predetermined portion of said binder from the configuration; and
(5) sintering said stripped and formed configuration from (4);

characterized by placing in the above step (3) only a chosen surface over which surface imperfections are acceptable of the configuration into intimate contact with the said absorbing body, whereby a minimum of forces is directed into the configuration by the absorbing body.

2. A method as set forth in claim 1 wherein said particulate material is taken from the class consisting of metals, ceramics and cermets.

3. A method as set forth in claims 1 or 2 wherein the volume of binder utilized is equal to volume of the interstices between the particles plus a minute volume.

4. A method as set forth in one of the claims 1—3, wherein said particles are of substantially spherical shape.

5. A method as set forth in one of the claims 1—4, wherein, in step (4) the temperature is initially raised to the point wherein binder flows from said configuration and then gradually increasing the temperature.

6. A method as set forth in one of the claims 1—5, wherein said porous body is non-deformable at sintering temperatures for said particulate material and wherein said temperature is elevated continuously after binder removal to sintering temperature for said particulate material.

7. A method as set forth in one of the claims 1—6, wherein said absorbing body is porous and wherein, in step (4) said binder is heated to a temperature above the flow point of said binder within said configuration.

8. The product of a process according to one of the claims 1—7.

**Patentansprüche**

1. Verfahren zur Herstellung eines Gegenstandes aus einer gebrannten, teilchenförmigen Konfiguration, das folgende Schritte umfaßt:

(1) Zusammenmischen vorbestimmter Mengen von sinterfähigem, teilchenförmigen Material und einem Bindemittel, wobei das Bindemittel im wesentlichen die gesamte Oberfläche der Teilchen des teilchenförmigen Materials abdeckt;
(2) Formen der Mischung aus (1) in eine gewünschte Konfiguration;
(3) In-Innige-Berührung-Bringen der Konfiguration aus (2) mit einem zur Absorption des Bindemittels fähigen absorbierenden Körper, der mit diesem Bindemittel benetzt ist;
(4) Fließenlassen des Bindemittels aus dieser Konfiguration in diesen absorbierenden Körper, um wenigstens einen vorherbestimmten Anteil dieses Bindemittels aus der Konfiguration zu extrahieren; und

(5) Sintern dieser gestrippten und geformten Konfiguration aus (4);

dadurch gekennzeichnet, daß im oben genannten Schritt (3) nur eine ausgewählte Oberfläche, auf der Oberflächenunvollkommenheiten akzeptabel sind, in innige Berührung mit dem absorbierenden Körper gebracht wird, wobei ein Minimum an Kräften in die Konfiguration durch den absorbierenden Körper gelenkt wird.

2. Verfahren nach Anspruch 1, dadurch gekennzeichnet, daß das teilchenförmige Material aus der Klasse der Metalle, Keramikmaterialien und Cermets ausgewählt ist.

3. Verfahren nach Anspruch 1 oder 2, dadurch gekennzeichnet, daß das Volumen des verwendeten Bindemittels gleich dem Volumen der Zwischenräume zwischen den Teilchen plus einem winzigen Volumen ist.

4. Verfahren nach einem der Ansprüche 1 bis 3, dadurch gekennzeichnet, daß die Teilchen eine im wesentlichen kugelförmige Gestalt haben.

5. Verfahren nach einem der Ansprüche 1 bis 4, dadurch gekennzeichnet, daß in Schritt (4) die Temperatur zu Anfang auf einen Punkt angehoben wird, bei dem das Bindemittel aus der Konfiguration abfließt, und daß dann die Temperatur allmählich erhöht wird.

6. Verfahren nach einem der Ansprüche 1 bis 5, dadurch gekennzeichnet, daß der poröse Körper bei Sintertemperaturen für das teilchenförmige Material nicht deformierbar ist, und daß die Temperatur nach der Entfernung des Bindemittels kontinuierlich auf Sintertemperatur für das teilchenförmige Material erhöht wird.

7. Verfahren nach einem der Ansprüche 1 bis 6, dadurch gekennzeichnet, daß der absorbierende Körper porös ist und daß in Schnitt (4) das Bindemittel auf eine Temperatur oberhalb des Fließpunktes des Bindemittels innerhalb dieser Konfiguration erhitzt wird.

8. Das Produkt aus einem Verfahren gemäß den Ansprüchen 1 bis 7.

**Revendications**

1. Procédé de produire un article d'une configuration en particules grillée, comportant les phases suivantes:

(1) mélanger des quantitiés prédéterminées d'une matière en particules frittable avec un liant qui couvre substaniellement la surface entière des particules de la matière en particules;

(2) formation du mélange selon (1) en une configuration désirée;

(3) mise en contact étroit de la configuration de (2) avec un corps absorbant étant capable à absorber ledit liant, le corps étant mouillé par ledit liant;

(4) permettre ledit liant de se jeter de ladite configuration dans ledit corps, ainsi extraisant de la configuration au moins une portion prédeterminée dudit liant; et

(5) fritter ladite configuration strippée et formée selon (4);

caractérisé en ce que seulement une surface choisie étant mise dans la phase (3) par laquelle des imperfections étant acceptables dans la surface de la configuration qui se trouve en contact étroit avec le corps absorbant, où un minimum des forces étant dirigé dans la configuration par le corps absorbant.

2. Méthode selon revendication 1, où ladite matière en particules dérive de la classe consistant en métaux, céramique et cermets.

3. Méthode selon les revendications 1 ou 2 où le volume du liant utilisé est équivalent au volume des interstices entre les particules plus un volume minime.

4. Méthode selon une des revendications 1 à 3, où lesdites particules ayant un degré substantiel de sphéricité.

5. Méthode selon une des revendications 1 à 4, où dans la phase (4) la température est d'abord accéléré à un point où le liant coule de ladite configuration et après haussant la température peu à peu.

6. Méthode selon une des revendications 1 à 5, où ledit corps poreux étant non-déformable sous des températures de frittage pour ladite matière en particules, et où ladite température étant élevé continuellement à la température de frittage pour ladite matière en particules, après l'extraction du liant.

7. Méthode selon une des revendications 1 à 6, où ledit corps absorbant étant poreux et où dans la phase (4) ledit liant étant échauffé à une température sur le point d'écoulement dudit liant dans ladite configuration.

8. Le produit d'un procès selon une des revendications 1 à 7.

FIG. 1

FIG. 2

FIG.3A          FIG.3B

FIG. 3